# EUROPEAN PATENT SPECIFICATION

(11) **EP 1 300 070 B1**
(45) Date of publication and mention of the grant of the patent: **14.06.2006**
(21) Application number: 02078987.1
(22) Date of filing: 27.09.2002
(51) Int. Cl.: A01K 5/02, A01K 1/12

(54) **An assembly for automatically supplying an amount of feed to a dairy animal in a predetermined period**
Anlage zur automatischen Zuführung einer Futterquantität für ein Milchtier in einer vorbestimmten Zeitperiode
Installation pour distribuer une quantité d'alimentation à un animal laitier dans une période de temps prédéterminée

(30) Priority: 03.10.2001 NL 1019092
(43) Date of publication of application: 09.04.2003
(73) Proprietor: Lely Enterprises AG, 6300 ZUG (CH)
(72) Inventor: Voogd, Lucien Eliza Niels, 4143 HG Leerdam (NL); van den Berg, Karel, 2971 BR Bleskengraaf (NL)
(74) Representative: Corten, Maurice Jean F.M.

(56) References cited:
- EP-A- 0 974 264
- EP-A- 1 008 294
- WO-A-00/13499
- WO-A-00/22919
- DE-A- 4 137 387
- NL-C- 1 010 898

## Description

The invention relates to an assembly for automatically supplying an amount of feed to a dairy animal in a predetermined period as defined in the preamble of claim 1.

Such an assembly in which feed is supplied to a dairy animal in a milking box is known from WO-A-00/22919. Said feed is in particular concentrate, in order that the dairy animal goes automatically to the milking box. Outside the milking box there are also made provisions for supplying feed to the dairy animal, in particular a calming component such as for example ensilaged grass.

It is an object of the invention to provide an assembly for automatically supplying an amount of feed to a dairy animal in a predetermined period, by means of which the feed supply takes place efficiently in a predetermined period, for example a period of 24 hours or a period defined by the period in which a certain number of cows has been milked or in which a certain number of cows has eaten or in which a certain amount of feed has been consumed or in which a certain amount of milk has been produced. Hereby is meant inter alia that no unnecessary waste of feed occurs, and that the amount of feed is adapted to the desired economic result, for example a desired milk yield and/or milk quality.

This object is achieved according to the invention by the characterizing features of claim 1. A capacity increase can thus be obtained when the control device gives a dairy animal access exclusively to one of the milking boxes respectively feeding parlours in dependence on the point of time. This can take place for example by controlling the relevant entrance gates to the milking boxes respectively controlling the dosing means of the feed troughs. In this way management of the dairy animal circulation can be obtained, the more as research has revealed that a dairy animal quickly learns when and where a feeding station respectively a feeding parlour is accessible to her. Furthermore long research has revealed that the order and/or the amount and ratio of sorts of feed to be supplied by which an optimal feed intake is obtained depends on the point of time of the day. It has been found for example that the feed intake behaviour can vary par animal in the moming, in the afternoon and in the evening. Long research has further revealed that the order and/or the amount and ratio of sort of feed to be supplied by which an optimal feed intake is obtained depends on the period of the year. It has been found for example that in the winter animals prefer a drier feed mixture respectively drier sorts of feed.

An embodiment of an assembly according to the invention is characterized in that the feeding station respectively the feeding parlour is suitable for automatically supplying at least two sorts of feed, the control signal controlling the feeding station respectively the feeding parlour in such a way that the at least two sorts of feed are supplied at least substantially separately. This embodiment is based on the insight that the feed intake by the animals can be improved by supplying the sorts of feed at least substantially separately. Long research has revealed that by providing variation in the offered feed it is achieved that animals demonstrate an improved feed intake. By means of the invention the order in which the sorts of feed are offered to the animal can be varied. This makes it more attractive for an animal to consume more feed, while the feed combination for obtaining the desired economic result needs not to be changed.

Although it is possible to supply only one of the sorts of feed separately from the other sorts of feed, while the remaining sorts of feed can be mixed, it is preferred, for the purpose of providing a greater variation in offered feed, when the control signal controls the feeding station respectively the feeding parlour in such a way that all sorts of feed are supplied to the feeding parlour respectively the feeding station at least substantially separately from each other.

In an embodiment of an assembly according to the invention, the control signal controls the feeding station respectively the feeding parlour in such a way that the order in which sorts of feed are supplied is arbitrary. This prevents the order in which the sorts of feed are supplied from becoming a standard order.

In a further embodiment of an assembly according to the invention, the feeding station respectively the feeding parlour is suitable for automatically supplying at least two sorts of feed, the assembly being provided with parameter-measuring means for measuring a momentary value of a variable parameter and for issuing a parameter value signal to the third control device, the control signal controlling the feeding station respectively the feeding parlour in such a way that sorts of feed are supplied in a particular amount and in a particular ratio collectively respectively as a mixture, the third control device being provided with a processing device for processing the parameter value signal into the control signal. This embodiment of an assembly according to the invention is based on the insight that the feed intake of the animals appears to depend on certain varying circumstances. Further, for example the amount and the quality of milk produced by a dairy animal also appear to depend on certain varying circumstances. According to the invention this is improved by automatically measuring, with the aid of parameter-measuring means, the momentary value of such a circumstance, called the variable parameter, and by processing the corresponding parameter value signal into the control signal. Thus it is possible to take the change in the parameter automatically into account when supplying feed. Moreover this can make it more attractive for a dairy animal to consume more feed.

In an embodiment of an assembly according to the invention, the assembly comprises atmospheric-condition-measuring means for measuring the atmospheric conditions and for issuing an atmosphere indication signal to the third control device. It has been found that the feed intake per animal depends inter alia on air humidity, temperature, atmospheric pressure and wind speed. By adapting the order and/or the amount and ratio of the sorts of feed to be supplied to these circumstances a desired feed intake can be ensured.

In another further embodiment of an assembly according to the invention, the assembly comprises means for measuring the condition score of an animal and for issuing acondition score signal to the third control device. It has been found that the order and/or the ratio and amount of the sorts of feed to be supplied by which an optimal feed intake is obtained depends on the condition score of the animal. The order and/or the ratio and the amount of sorts of feed to be supplied can then also be adapted in order to obtain an improvement of the condition score. When for example the condition score indicates that the animal has a deviating value in comparison with its standard condition score, the order and/or the amount and ratio of sorts of feed to be supplied can ensure a better consumption by the animal of just the sorts of feed required for improving the condition score.

In a still further embodiment of an assembly according to the invention, the assembly comprises means for determining per animal the eating rate per sort of feed, and for issuing an eating rate signal to the third control device. Long research has revealed that the eating rate of the animal is an indication of the order and/or the amount and ratio of sorts of feed which the animal finds the tastiest.

In another embodiment of an assembly according to the invention, the assembly comprises means for measuring per animal the milk yield, and for issuing a milk yield signal to the third control device. This makes it possible to optimise the milk yield by determining a suitable order and/or amount and ratio of sorts of feed to be supplied. The relation between the energy contents of the feed and the milk yield is known per se, but the invention is based on the insight that adaptation of the order of the sorts of feed to be offered and/or an automatic feed back by measuring the milk yield can lead quickly to an adaptation of the optimal feeding.

In a further embodiment of an assembly according to the invention, the assembly comprises means for measuring the amount of protein and/or fat and/or minerals and/or amino acids or the like in the milk obtained from that animal, and for issuing an ingredient signal to the third control device. This makes it possible to ensure continuously that the total of feed to be offered to an animal contains the required ingredients for that animal, in order to provide the correct amounts of ingredients, such as fats, proteins, sugars and the like, in the milk obtained from that animal.

In a still further embodiment of an assembly according to the invention, the assembly comprises means for measuring the amount of a sort of feed consumed by an animal, and for issuing a consumed amount signal to the third control device. The detection device comprises in particular a weighing device for weighing the amount of feed in the feeding parlour, although other means such as picture recognition equipment can also be applied.

For the purpose of inputting data into the third control device, in an embodiment of an assembly according to the invention, the third control device is provided with an inputting device for inputting data into a memory of the third control device.

Because some of the above-mentioned data are not known to a farmer, it is advantageous when the third control device is suitable for generating itself data for the memory. It is possible for example that the control device changes the order and/or the amount and ratio of feed to be offered at a particular ambient temperature, and determines each time at each chosen order and/or amount and ratio the intake by the animal. Thus it is possible that the third control device determines itself the optimal amount and ratio at a particular ambient temperature.

Because an animal develops continuously, it is advantageous when the data are updated continuously, so that on determining the order and/or the amount and ratio of sorts of feed to be offered a developing animal can be taken into account.

In an advantageous embodiment of an assembly according to the invention, the feeding station respectively the feeding parlour is provided with a receptacle and with conveying means comprising a first conveyor for conveying an amount of feed from the hopper to the receptacle and a second conveyor for conveying the amount of feed from the receptacle to a feed trough. The receptacle is preferably provided with a weighing device for measuring feed present in the receptacle. This makes it possible to determine the amount of feed to be supplied to the feed trough.

Although the feed can be taken out of the receptacle by means of a separate taking-out device, for the sake of simplicity of the construction it is advantageous when there is not used a separate device for taking out. There may be used a tiltable receptacle, feed falling from said receptacle after the latter has been tilted. However, for improving the hygienic use of the feeding station respectively the feeding parlour, it is preferred when the receptacle has a bottom which is designed to be opened. The receptacle is preferably provided with a fourth control device for controlling the opening of the bottom. It has appeared to be particularly suitable when the second conveyor is constituted by a tube-shaped chute respectively a channel-shaped chute.

In order to prevent that an animal keeps waiting at a feeding parlour respectively the feeding station after having been fed, in an embodiment of an assembly according to the invention, the feed trough is constituted by a feed trough capable of being closed, the fourth control device also being suitable for controlling the operation of the closing means. The fourth control device is preferably integrated in the third control device.

Said period, for example 24 hours, can be measured from a fixed point of time of the day, for example 00:00 hours A.M. However, alternatively it is possible to distribute the amount of feed to be supplied over a so-called sliding window. Such a sliding window is preferably formed in that said period immediately precedes the momentary point of time of the visit of a dairy animal to the feeding station or the feeding parlour.

The invention will now be explained in further detail with reference to an embodiment shown in the drawing, in which:
Figure 1 is a schematic cross-sectional view of an embodiment of a feeding parlour in the form of a feeding column constituting part of an assembly according to the invention;
Figure 2 is a schematic side view of an embodiment of a milking box constituting part of an assembly according to the invention;
Figure 3 shows a first embodiment of means for measuring the amount of a sort of feed consumed by an animal in a feeding parlour respectively feeding station of an assembly according to the invention;
Figure 4 shows a second embodiment of means for measuring the amount of a sort of feed consumed by an animal in a feeding parlour respectively a feeding station of an assembly according to the invention;
Figure 5 shows a third embodiment of means for measuring the amount of a sort of feed consumed by an animal in a feeding parlour respectively a feeding station of an assembly according to the invention;
Figure 6 shows a fourth embodiment of means for measuring the amount of a sort of feed consumed by an animal in a feeding parlour respectively a feeding station of an assembly according to the invention, and
Figure 7 shows a fifth embodiment of means for measuring the amount of a sort of feed consumed by an animal in a feeding parlour respectively a feeding station of an assembly according to the invention.

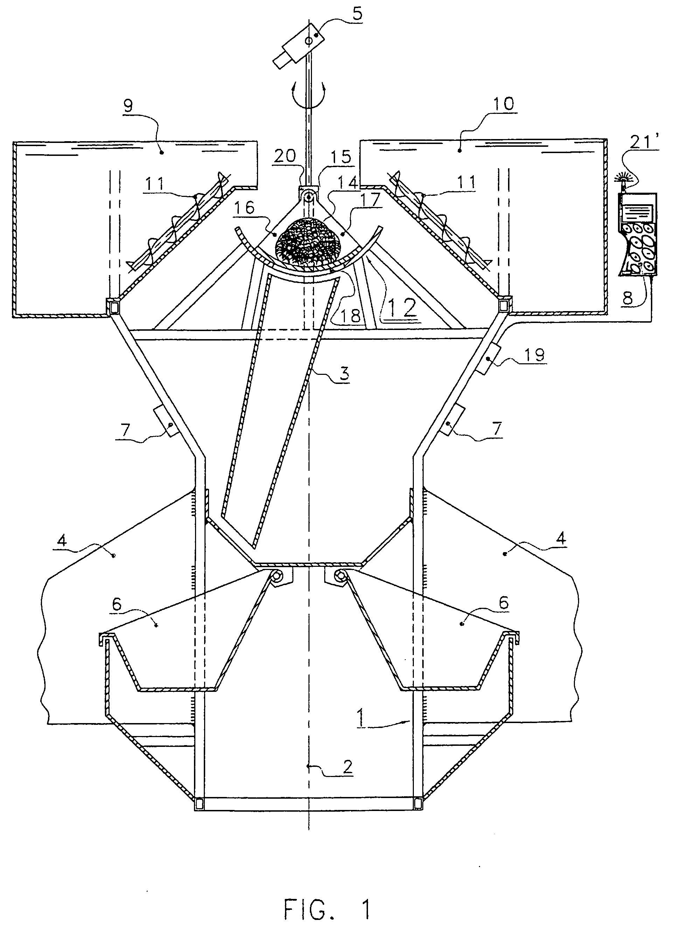

Figure 1 shows a feeding column constituting part of an assembly according to the invention. A framework 1, having a substantially circular circumference, is disposed around a central axis 2. A number of hoppers 9, 10 (two of which shown in the drawing) are located at the upper side of the framework 1. For the installation of the hoppers 9, 10 there are made not further shown provisions on the framework 1. Each hopper 9, 10 contains a particular sort of feed.

The framework 1 is provided with partitions 4 which are detachably disposed on the framework 1.

Feed troughs 6 for the animals are disposed in a circular arrangement in the lower part of the feeding column. By means of the geometry of the feeding column it is achieved that the construction occupies little space, while the accessibility of the feeding column to the animals is optimal from all directions.

The feeding column further comprises conveying means comprising a first conveyor 11 and a second conveyor 3 for conveying feed from the hopper 9, respectively 10 to the relevant feed trough 6. The feed can be conveyed directly from the hoppers 9, 10 to the feed troughs 6. In the embodiment shown there is provided a receptacle 12, for example centrally located, receiving an amount of feed conveyed by the first conveyor 11 from the hopper 9, 10 to the receptacle 12. As a first conveyor 11 an auger, gripper, conveyor belt, or any other construction known per se for conveying feed, can be used.

A second conveyor 3, preferably constituted by a tube-shaped chute respectively a channel-shaped chute, is suitable for conveying the amount of feed from the receptacle 12 to the relevant feed trough 6. For conveying the feed to the relevant feed trough 6 it is advantageous when the tube-shaped chute 3 is rotatably mounted in the feeding column. The tube-shaped chute respectively the channel-shaped chute is preferably made of stainless steel.

The feeding column is provided with a second control device 19. The second control device 19 controls under control of a third control device 8 (said control devices being for example interconnected by means of a line) the components of the feeding column in such a way that sorts of feed are supplied in a particular order and/or ratio and in a particular amount to the feed trough 6.

The feeding column may be provided with feed-determining means 5 for determining the sort of feed in a hopper 9, 10. Such feed-determining means may comprise for example an olfactometer, a colour meter or picture recognition equipment (such as described for example in U.S. patent 4,843,561).

For the purpose of conveying an amount of a sort of feed 14 to the tube-shaped chute 3 the receptacle 12 has a bottom which is designed to be opened. In the embodiment shown this is realised in that the bottom of the receptacle 12 has two halves 16 and 17 which are pivotable about an axis 15. When the halves 16, 17 move away from each other, there is thus created a chute aperture 18 through which the amount of sort of feed 14 falls into the tube-shaped chute 3.

The second control device 19, although another (fourth) control device may serve as well for that purpose, controls the opening of the bottom of the receptacle 12. Said second control device 19 preferably also controls the order of functioning of the first and second conveyors 11 respectively 3, so that the supply of the sorts of feed can take place quickly.

There are provided identification means 7 for identifying an individual animal. In the embodiment shown the identification means 7 are disposed on the framework 1, but it will be obvious that the identification means can also be disposed at other places, such as for example the feed troughs 6. With the aid of the identification means 7 the identity of an animal present at a feed trough 6 is established automatically. With the aid of data stored in the memory of for example the second control device 19, the amounts of sorts of feed intended for that animal can then be supplied in a particular ratio and/or order. With the aid of a weighing device 20 known per se the amount conveyed to the receptacle 12 by the first conveyor 11 can then be checked. The second control device 19 further controls, with the aid of data from the third control device 8 and the animal identification means 7, the movement of the tube-shaped chute 3 so that the latter is located just over the correct feed trough 6. The second control device 19, under control of the third control device 8, further controls the drive of the conveyors 11. It will be obvious that, depending on the wishes of the farmer, the second control device 19 can also function independently of the third control device 8. To that end suitable measures can be taken.

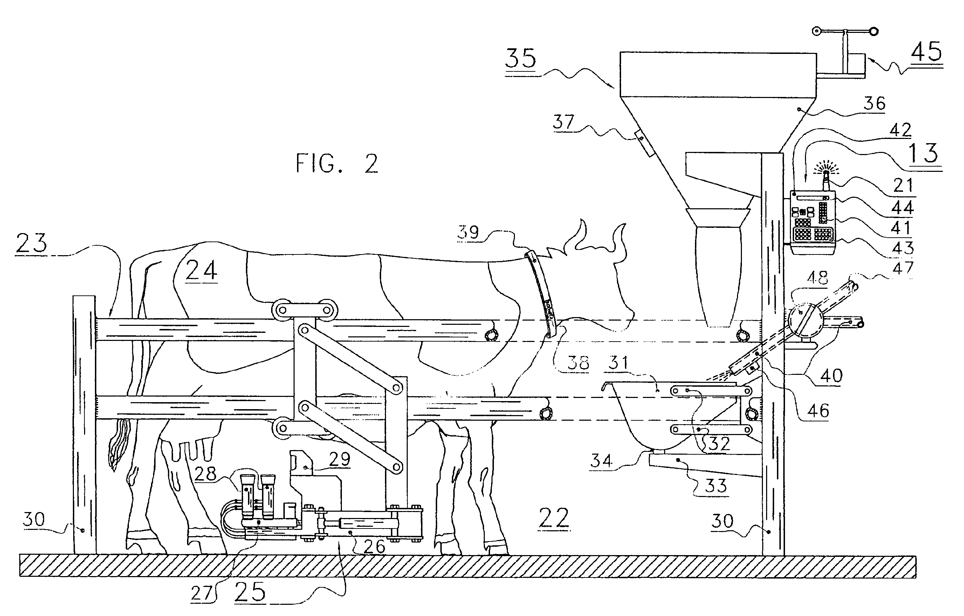

Figure 2 is a side view of a milking box 22 constituting part of an assembly according to the invention. The milking box 22 comprises a fencing 23 disposed near the circumference of a cow 24 during her stay in the milking box 22. On one side of the milking box 22 there is disposed a milking robot 25. The milking robot 25 comprises for example a robot arm 26 having at its end teat cups 28 supported by a carrier 27. On the robot arm 26 near the teat cups 28 there is further disposed a sensor 29 with the aid of which the position of the teats of a cow (24) to be milked can be determined.

Near the front side of the milking box 22 a feed trough 31 is fastened to a post 30. In the embodiment shown the feed trough 31 is connected with a post 30 by means of a parallelogram hinge construction 32. The feed trough 31 is supported at its lower side by a supporting beam 33. Between the supporting beam 33 and the lower side of the feed trough 31 there is further disposed a measuring device 34 by means of which the weight of the feed trough 31 with contents can be determined. In the present embodiment the measuring device 34 comprises a piezo-element. It will be obvious that the invention is not limited to this specific manner in which the contents of the feed trough can be measured, and hereinafter some alternative ways of determining the weight of the feed trough with contents will be described.

Over the feed trough 31 there is fitted to the post 30 a feeding station 35 comprising a number of hoppers (not shown in the drawing), each for containing one sort of feed, and a tube-shaped chute (analogously to the feeding column as described above). The feeding station 35 comprises a reservoir 36 surrounding the hoppers for the sorts of feed. Against the outer wall of the reservoir 36 there is disposed a receiver 37 constituting part of (non-shown) identification means. The receiver 37 can receive the signals from a transmitter 38 disposed on a collar 39 around the neck of the cow 24. It will be obvious that different sorts of identification means are applicable in the invention and that the invention is not limited to one sort of identification means. The receiver and the transmitter may further be disposed at different places. For example the receiver may be disposed on the feed trough 31 and the transmitter may be implanted in the cow.

Near the upper side of the feed trough 31 there is further fitted to the post 30 a liquid supplying device 40, for example a sprayer, with the aid of which an amount of liquid, for example water, or a viscous liquid, such as syrup or treacle, can be added to the feed present in the feed trough 31.

The device operates as follows:

After the cow 24 has entered the milking box 22 and the transmitter 38 has come into the receiving range of the receiver 37, the cow 24 is automatically identified by the identification means. Per cow data in relation to the sorts of feed and the amount thereof offered to a relevant cow per feeding run are stored in a manner known per se in a memory 41 of a computer 42 belonging to a first control device 13. The first control device 13 is controlled by the third control device 8 which is for example connected in a wireless manner with the first control device 13. For that purpose each of them is provided with a transmitter-receiver 21, 21'.

When a cow 24 has been identified, the identification means send a signal to the computer 42 which, with the aid of the data stored in the memory 41, controls the feeding station 35 in such a way that an amount and ratio of sorts of feed belonging to the cow 24 are supplied possibly in a particular order.

Besides, the amount of feed consumed by a cow can be optimised further by adding an amount of liquid to a sort of feed by means of the liquid supplying device 40. What should be the amount of liquid to be added per cow per sort of feed is determined per cow with the aid of data in the memory 41 of the computer 42. Said data contain per cow a relation between the intake of the sort of feed and the added amount of liquid for obtaining for example a desired milk production. Thus, after a cow 24 has been identified, the computer 42 issues a signal to the liquid supplying device 40 for supplying the relevant amount of liquid. For that purpose the computer 42 uses the relevant data from the memory 41.

For the first use of the device according to the invention these data can be inputted into the memory 41 by making use of inputting means, such as a keyboard 43. This can be done by a farmer who inputs values per cow and per sort of feed according to his experience. For facilitating the input and for checking the functioning of the device during the use thereof, the computer 42 comprises a display screen 44.

The feeding station preferably comprises measuring means 45 for measuring the atmospheric conditions, such as temperature, air humidity, atmospheric pressure, wind speed and the like. The data in the memory 41 can contain per cow a relation between the amount of liquid to be added per sort of feed in dependence on the environmental conditions, which relation leads to a desired feed intake.

Thus in the embodiment described, after a visit of a cow to the milking box the following data are stored in the memory: the amount consumed per sort of feed, the amount of liquid added per sort of feed, the temperature, the air humidity, the atmospheric pressure, the wind speed, and the milk yield, and possibly the order of sorts of feed supplied. When a cow has consumed all the feed supplied, said data are processed by the computer into the memory, so that at a next visit of the cow under the same circumstances the same amounts of liquid can be added to the sorts of feed.

When the cow has not consumed all the feed, at the next visit of the cow to the milking box it is possible to change the amount of liquid which is added to the sorts of feed or the ratio and amount in which the sorts of feed are offered themselves. For changing the amount of liquid to be added different approaches can be made. For example, the amount of liquid to be added can be increased at the next visit by 5% (another increase, or even decrease, is also possible, of course), after which the amount of feed consumed is measured. Accordingly, the amount of liquid is changed automatically per visit of the cow to the milking box until the cow has eaten the entire amount of the sort of feed supplied. In the latter case the data are recorded by the computer in the memory as standard values. Otherwise, they are stored temporarily, for providing the possibility of determining the standard values. The control device comprising the computer can be programmed such that certain data are given priority for determining the amount of liquid to be added. An example of a priority order is: amount consumed of the sort of feed, milk yield, air humidity, temperature, atmospheric pressure, wind speed. Of course, another order, in dependence on the wishes of the farmer, is possible as well. Thus there is provided an iterative way of determining the amount of liquid to be added for obtaining the optimal feed intake. This supply of feed by adding liquid can also be used for the feeding column. It will further be obvious that adding or determining the order of supply of sorts of feed takes place analogously to adding liquid.

The liquid supplying device 40 may be provided with a heating device or cooling device 46 for the liquid, bringing the liquid at a temperature suitable for optimal feed intake and possibly making the viscous liquid better processable. The operation of the heating/cooling device 46 can also be controlled by the computer 42 with the aid of data from the identification means and the data from the memory 41.

The device is provided with an additive device 47 for adding additives to the feed. Said additive device can be controlled by the computer 42 which controls for example a valve 48 in dependence on data from the identification means and data from the memory 41. As a result thereof for each cow individually certain additives, such as medicines, vitamins, fish oil, salts, minerals, and the like, can automatically be added to the feed.

By means of the measuring device 34 it is further determined how much feed a relevant cow has consumed during the feeding time. The amount of the sort of feed and the amount of liquid added can also be determined separately. These data can be used for continuously updating the data in the memory and possibly adapting them to a changing eating behaviour of the cow.

As mentioned in the foregoing, some alternatives for determining the weight of a feed trough, in particular the amount of feed present therein, will now be described.

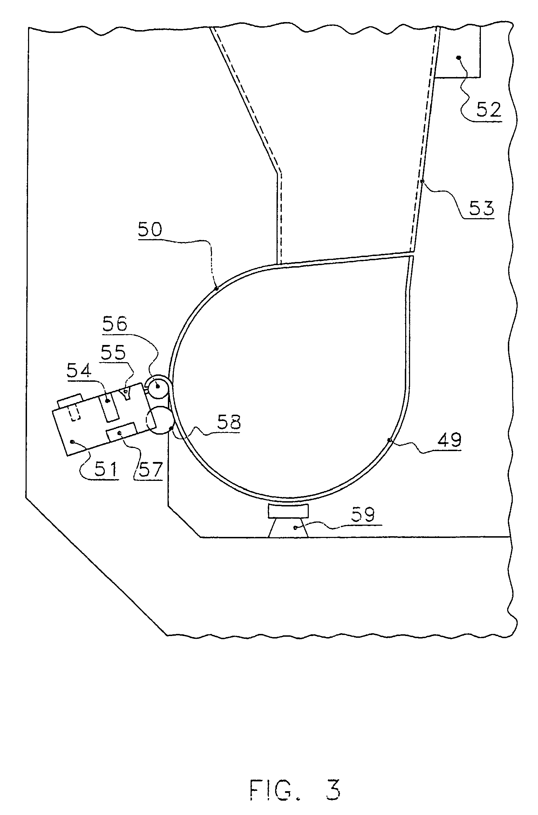

Figure 3 shows schematically a first embodiment of a feed trough 49 for containing feed. An entrance opening 50 gives an animal, for example but not exclusively a cow, access to the feed trough 49. An identification means known per se, i.e. an animal identification device 51, is disposed near the feed trough 49 and recognises a particular animal approaching the feed trough 49 and wishing to make use of it. With the aid of data from the animal identification device 51, a control device 52 supplies an amount of a particular sort of feed to the feed trough 49, the amount of said sort of feed falling into the feed trough 49 via for example a tube-shaped chute 53.

By weighing the amount of the sort of feed present in the feed trough, it can be determined how much of a particular sort of feed is consumed by a particular animal, and also whether remaining feed is present in the feed trough. The means for weighing the feed present in the feed trough are preferably connected with the control device for supplying, with the aid of data both from the animal identification device and the means for weighing, an amount of a sort of feed to the feed trough, while the amount of a sort of feed left by the previous animal can thus be taken into account.

In Figure 3 the means for weighing the feed present in the feed trough 49 comprise a feed trough 49 which is pivotable about a pivot axis 56. The degree of pivoting is determined by the weight of the feed present in the feed trough 49. There is provided a device 57 for determining the degree of pivoting of the feed trough 49, and for deducing therefrom the weight of the feed present in the feed trough 49. The device 57 for determining the degree of pivoting of the feed trough 49 comprises a measuring roll 58 being in contact with the feed trough. From the degree of rotation of the measuring roll 58 the degree of pivoting and thus the amount of feed in the feed trough 49 can be determined.

Because of the fact that the device 57, 58 for determining the degree of pivoting of the feed trough 49 is integrated in the animal identification device 51, there is obtained a compact construction.

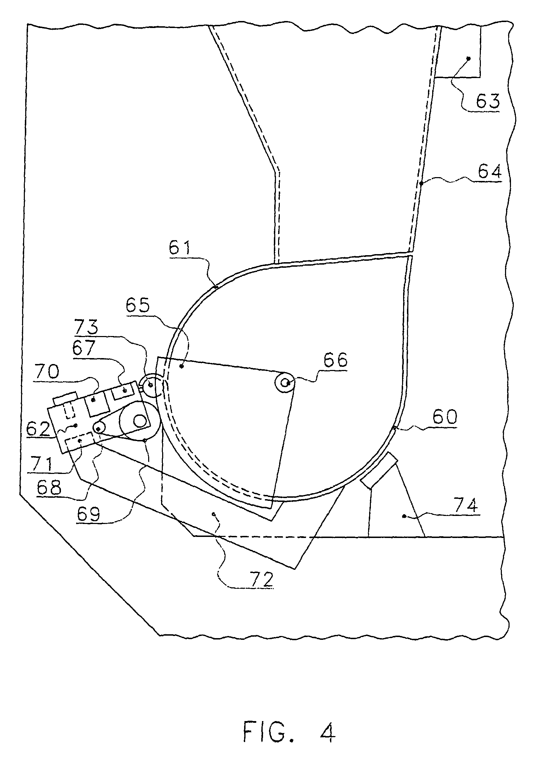

Alternatively or additionally, as shown in Figure 4, the pivoting-determination device 70 for determining the degree of pivoting of the feed trough 60, and for deducing therefrom the weight of the feed present in the feed trough 60, may comprise a dynamometer 71. In the embodiment shown, the feed trough 60 bears on the dynamometer 71 via a supporting arm 72. In this situation the feed trough 60 pivots about a pivot axis 73. The dynamometer 71 is preferably included in the animal identification device 62.

In the embodiments shown in Figures 3 and 4, even small differences in weight can be measured, because the pivot axis 56, 73 and the measuring roll 58 respectively the dynamometer 71 are located at a small distance from each other.

For preventing in undesired cases of malfunction, for example when the animal pushes the feed trough downwards with force, the measuring roll, the dynamometer or the like from being damaged, in both embodiments there may be provided a safety support cam 59 (Figure 3) respectively 74 (Figure 4) for supporting the feed trough 49; 60.

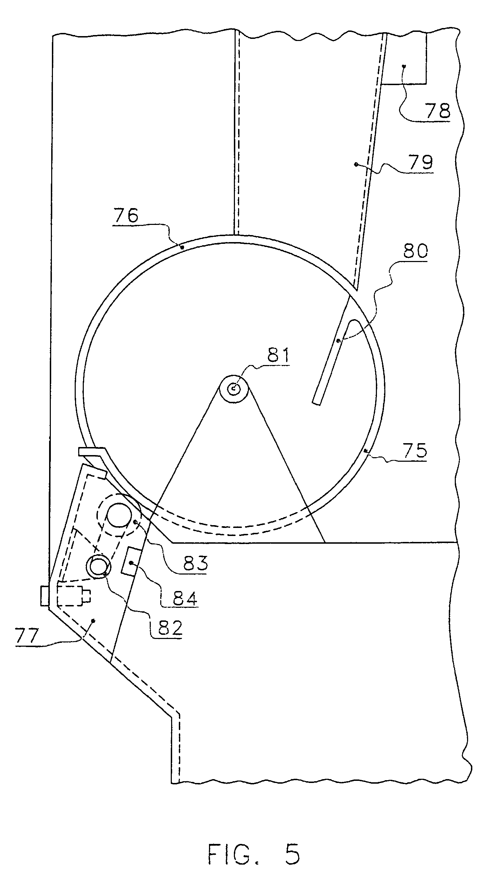

In the third embodiment, as shown schematically in Figure 5, the means for weighing the feed present in the feed unit comprise a movable feed trough 75. The feed trough 75 is moved in a reciprocating manner by the motor 82 by which the roll 83 is driven. As a result of this movement there is created a torque whose magnitude is determined by a device 84 for measuring the magnitude of the torque. From the torque determined the device 84 deduces the weight of the amount of a sort of feed present in the feed trough. The exact correlation between torque and amount of feed can previously be determined by simple calibration tests.

The embodiment according to Figure 5 has a compact construction because of the fact that the motor 82 for moving the feed trough 75, and the device 84 for measuring the magnitude of the torque during moving and for deducing the weight of the amount of the sort of feed present in the feed trough 75 from the measured magnitude of the torque, are integrated in the animal identification device 77.

The feed trough may be provided with means for holding back an animal wishing to make use of the feed trough at an undesired point of time, or preventing that animal from making further use of the feed trough (for example for the remaining sorts of feed) or making further use of the feed trough impossible for that animal, with the aid of data from the animal identification device. As a result thereof it is possible to deter, in a simple, efficient and cheap manner, animals which are not eligible to be fed from putting their heads into the feed trough, and to teach an animal first to eat the sort of feed present in the feed trough before another sort of feed is offered.

In the first embodiment shown in Figure 3, the means for holding back an animal comprise a loudspeaker 55 for issuing an animal-deterring sound. Alternatively or additionally the means for holding back an animal may comprise a lighting device 54 for producing an animal-deterring light. In particular when several feed troughs are juxtaposed, the use of deterring light is desirable, because this light can be focussed such that it only produces an effect on one particular feed trough.

In the second embodiment according to Figure 4, the means for holding back an animal comprise a closing means 65 which is movable across the entrance opening 61. When the closing means 65 is moved across the entrance opening 61, the contents of the feed trough 60 can be made inaccessible to a particular animal. In the embodiment shown the closing means 65 is constituted by a vessel-shaped element capable of rotating about an axis 66. Said axis 66 may be constituted by a motor-driven axis, said motor being controlled with the aid of data from the animal identification device 62.

Additionally there may be provided a voltage supplying device 67 for supplying an animal-deterring electric tension to the closing means 65. Animals approaching the feed trough 60 undesirably often make contact with the feed trough 60. They will in particular touch the closing means 65 with their noses. By connecting precisely those components of the feed trough that are regularly touched by animals with the voltage supplying device 67, it is possible to deter a particular animal very locally. Accordingly, such a voltage supplying device 67 can also be used per se independently of a closing means.

The second embodiment also comprises a control device 63 and a tube-shaped chute 64 for the feed.

The devices described can be designed extremely compactly when the means for holding back an animal are integrated in the animal identification device. Alternatively the means for holding back an animal may be separate means.

In the third embodiment according to Figure 5, the closing means is constituted by the feed trough 75 itself which is designed movably. In the shown situation the feed trough 75 is rotatably disposed about an axis 81, which axis 81 may be constituted by a motor-driven axis, said motor being controlled by the animal identification device.

In order to prevent that, in the position in which the feed trough 75 closes the entrance opening 76, feed falls from the feed trough 75, the feed trough 75 is provided with a wall portion 80 for catching remaining feed. Said wall portion 80 can also act as a feed guiding means for feed supplied through the tube-shaped chute 79 to the feed trough 75.

As described, in the second and third embodiment there is provided a simple but reliable construction due to the fact that the closing means rotates about an axis, the closing means being driven by a motor controlled by the animal identification device. For the purpose of providing, besides a simple but reliable construction also a compact construction, a roll 69 respectively 83 is preferably driven by a motor 68 respectively 82, said roll 69, 83 being in contact with the closing means 65 respectively 75. In the third embodiment the feed trough 75 thus bears on the animal identification device 77 via the roll 83.

Although for the roll 83 a separate torque roll may be used, it is preferred when the roll 83 performs both the function of driving the closing means, in this case the feed trough 75 itself, and the function of torque roll respectively measuring roll. Of course, in the alternative case in which the feed trough 75 is moved by the axis 81 driven by a motor, the torque can also be measured via that motor.

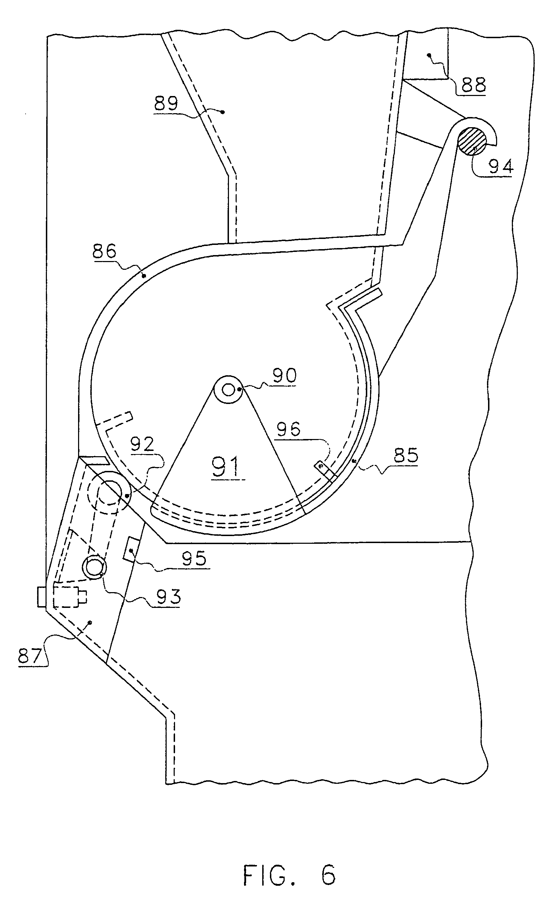

The fourth embodiment, as shown in Figure 6, comprises both means for holding back an animal wishing to make use of the feed trough 85 with the aid of data from the animal identification device 87, and means for weighing the feed present in the feed trough 85.

The means for holding back are constituted by a separate closing means 91 which is rotatable about an axis 90. The closing means 91 is set in rotation by a roll 92, capable of coming into contact with the closing means 91, and is driven by a motor 93 which is controlled by the animal identification device 87.

In this embodiment the weighing means are constituted by a feed trough 85 which is rotatable about an axis 94. The feed unit 85 can be brought into contact with the roll 92, and is subject to a reciprocating movement by correct operation of the motor 93 by which the roll 92 is driven. By the movement of the feed trough 85 there is generated a torque which can be measured by the torque measuring device 95.

In the situation shown in Figure 6 the roll 92 makes contact with the feed trough 85 and the latter can be set in motion for determining the amount of sort of feed present in the feed trough 85. After an animal has consumed the sort of feed, the amount of remaining sort of feed can be determined by torque measurement. Then the roll 92 is controlled by the motor 93 in such a way that it partially covers the entrance opening 86. A catching device 96 on the feed trough 85 takes along the closing means 91 until the latter comes into contact with the roll 92. Then the roll 92 controls the closing means 91 in such a way that it covers the entire entrance opening 86. As a result of the fact that the feed trough 85 is no longer in contact with the roll 92, the feed trough 85 falls back to the starting position in which a next sort of feed can possibly be supplied via the tube-shaped chute or channel-shaped chute 89.

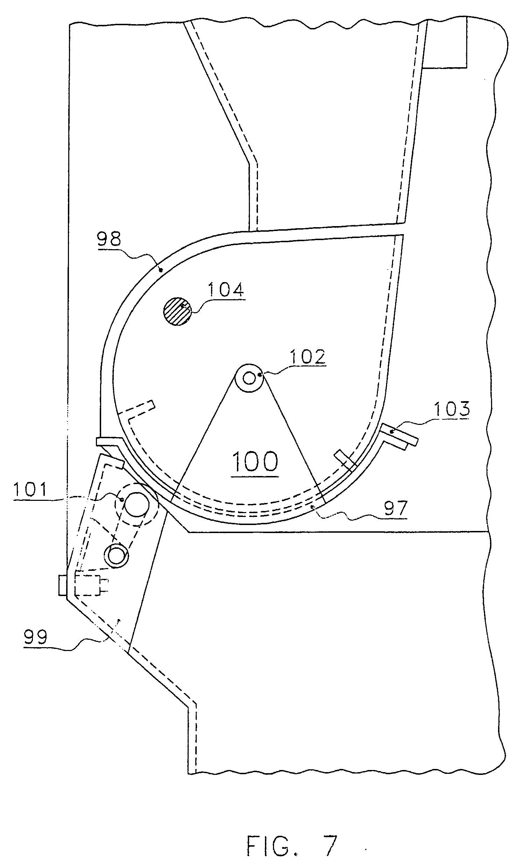

The fifth embodiment according to Figure 7 differs from that of Figure 6 by the location of the pivot axis 104 about which the feed trough 97 rotates. The pivot axis 104 is disposed close to the roll 101 for driving the feed trough 97 and measuring the torque, for measuring very small differences in amount of feed. There is also provided a stop 103 for preventing superfluous movement of the feed trough 97. The closing means 100 for closing the entrance opening 98 pivots about the axis 102.

The invention will be elucidated hereinafter with reference to a feed ration to be offered to a cow, which ration may be composed of the following four sorts of feed: concentrate, ensilaged grass, maize and brewer's grains. However, it will be obvious that other sorts of feed can be added and/or certain sorts of feed can be replaced by other sorts of feed. The way of adding a certain amount of liquid as described above can analogously be used for determining the order of sorts of feed to be supplied and for determining the amounts and ratio of the sorts of feed to be added. As known per se, in order to obtain a particular milk yield per period, for example per day, a particular amount of feed with a particular energy contents is supplied to a dairy animal. According to the invention the third control device controls the first control device (for the feeding station in the milking box) and/or the second control device (for the feeding column) in such a way that the collective supply of feed in said predetermined period is at least approximately equal to said amount of feed. It will be obvious that the cow still has to be lured to the milking box by supplying there feed that is attractive for that cow. This attractive feed has not always to be concentrate, but may also be constituted by brewer's grains for an animal having an extremely strong preference for brewer's grains. The energy needed for that cow, which energy is substantially provided by concentrate, is then provided in the feeding column. Accordingly, according to the invention, the feed supplied to a particular cow in the feeding station and the feeding column is attuned to that particular cow, the total daily ration being supplied by the two feeding parlours collectively.

Furthermore, according to the invention there can be provided variation in the offered feed due to the fact that the third control device 8 controls the assembly in such a way that amount of feed to be supplied to the relevant feed trough 6, 31, 49, 60, 75, 85, 97 depends on the measured values of relevant variable parameters. For example, in dependence on the measured value, more concentrate and ensilaged grass, but less maize and brewer's grains may be supplied. On the other hand, in the case of changing circumstances more ensilaged grass and less maize, concentrate and brewer's grains may be supplied. It will be obvious that the amount per sort of feed is controlled by the third control device.

The ratio and amounts are also determined in dependence on the preferences, the environmental conditions respectively in dependence on the desired economic results.

It has been found for example that one cow prefers brewer's grains to other sorts of feed, whereas another cow prefers concentrate and finds brewer's grains not tasty at all. The invention may be advantageous to prevent that the latter cow, just because brewer's grains is present in the offered feed, consumes less than desirable. For example, in that situation, when brewer's grains does not contain a nutritive ingredient that the other sorts of feed do contain, brewer's grains is not offered to that cow. When that cow needs an ingredient that is only present in brewer's grains, the control device is capable of controlling the relevant components in such a way that the composition of the mixture is such that the cow still consumes the brewer's grains. Such a control by the third control device can take place due to the fact that such data are stored in the memory of the third control device.

It has further been found that in humid circumstances cows prefer drier feed mixtures, so that in that case more dry ensilaged grass, and less of the wetter concentrate has to be supplied.

The atmospheric-condition-measuring means described above can then ensure an automatic adaptation of the ratio and/or amount, in dependence on the measured temperature, humidity, atmospheric pressure, wind speed and the like.

Like with human beings, the optimal feed intake of a cow may depend on the point of time of the day, and thus it is possible to distinguish for example breakfast, lunch and dinner. Also these data may be included in the memory. When a clock, which is not explicitly shown in the drawings but is implicitly present in the computer, indicates the point of time of the day and issues a corresponding time signal to the control device, the point of time of the day can automatically be taken into account. It has further been found that there is per cow a season-dependence in the ratio and amount of sorts of feed offered ensuring an optimal intake, which can automatically be taken into account by means of the clock.

Besides, the eating rate (from which the preference, respectively taste of the animal can be deduced), the milk yield, and the amount of energy and/or protein and/or fat and/or minerals and/or amino acids, and the like present in the milk produced by a cow appear to be suitable for being used as data in the memory for controlling the ratio and amount of the sorts of feed to be supplied.

Such data, analogously to what has been described above in relation to adding liquid, can be inputted into the computer by means of the keyboard or another comparable inputting device for inputting data into the memory. Such data can also automatically be generated by the control device itself, by providing variation in the sorts of feed to be offered and by determining the feed intake resulting therefrom, respectively the economic result resulting therefrom, and by automatically varying the offered feed in dependence on the result. This feed back can also take a developing animal into account.

Because a number of data can be used by the control device for generating the control signal, there can also be provided a priority algorithm, as a result of which, on determining the order of sorts of feed to be offered, one data (for example air humidity) is given priority over another data (such as eating rate) when generating the control signal. Moreover, weight factors can be allotted to the various data, so that it is possible to take several data into account simultaneously. Such programs and algorithms are known per se to the person skilled in the art.

According to the invention, additionally or alternatively there can be provided variation in the offered feed due to the fact that the third control device 8 controls the assembly in such a way that at least one sort of feed is supplied at least substantially separately from the other sorts of feed to the relevant feed trough 6, 31, 49, 60, 75, 85, 97. Thus the order in which the sorts of feed are offered to the cow can be varied. For example the order may be: concentrate, ensilaged grass, and a mixture of maize and brewer's grains, but may also be: ensilaged grass, a mixture of maize and concentrate, and separately brewer's grains. Besides, all sorts of feed can also be supplied at least substantially separately, of course. It will be obvious that the amount per sort of feed is also controlled by the control device.

The control signal issued by the third control device can control the device in such a way that the order in which sorts of feed are supplied to the feed trough separately from each other is arbitrary, so that each time when the cow arrives at the feed trough it is a surprise which sort of feed is supplied first.

However, the order can also be determined in dependence on the preference of the relevant cow, respectively in dependence on the environmental conditions, respectively in dependence on the desired economic results.

It has been found for example that one cow prefers brewer's grains to other sorts of feed, whereas another cow prefers concentrate and does not find brewer's grains tasty at all. The invention may be advantageous to prevent that the latter cow, just because brewer's grains is present in the offered feed, consumes less than desirable. For example, in that situation, when brewer's grains does not contain a nutritive ingredient that the other sorts of feed do contain, brewer's grains is not offered to that cow. When that cow needs an ingredient that is only present in brewer's grains, the control device is capable of controlling the relevant components in such a way that brewer's grains is offered as the first sort of feed. At this point of time, before the cow begins to eat, she has the most appetite and will earlier be inclined still to consume her portion. This can be stimulated in particular due to the fact that the control device offers, after the brewer's grains, the sort of feed which that cow finds the tastiest one. Such a control by the third control device can take place because of the fact that such data are stored in the memory of the computer.

It has further been found that in humid circumstances cows prefer dry ensilaged grass and find the wetter concentrate less interesting. Also the accommodation appears to be able to influence the feed intake, so that it is recommended to include such data in the memory.

Because the number of possible combinations between data per cow is extremely large, for the sake of simplicity of the description it is impossible to describe the possible combinations. With the aid of the above-mentioned information, it is possible for a person skilled in the art to obtain, depending on his/her wishes, the desired amounts and ratios of sorts of feed to be offered by means of simple trial and error tests. It will further be obvious that the functioning and control of components of the feeding column can also be applied to the feeding station and vice versa. Moreover it is noticed that, although the invention is described by way of example with reference to a feeding column as feeding parlour, it will be obvious that the invention can also be applied to other embodiments of feeding parlours.

## Claims

1. An assembly for automatically supplying an amount of feed to a dairy animal in a predetermined period, said assembly being provided with several milking boxes (22), each provided with a milking robot (25) for automatically milking a dairy animal, each milking box (22) being provided with a feeding station (35) for automatically supplying feed (14) to the dairy animal under control of a control device, with several feeding padours located outside the milking boxes (22) for automatically supplying feed to the dairy animal under control of the control device, said control device controlling the collective supply of feed in said predetermined period such that it is at least approximately equal to said amount of feed, with a clock for measuring the point of time of the day and for issuing a time signal to the control device, with a memory for incorporating data regarding to the optimal feed intake of an animal depending on the point of time of the day, and with entrance gates to the milking boxes and/or the feeding parlours, said entry gates being controlled by the control device, **characterized in that**, the control device, in dependence on the point of time measured by the clock, generates a control signal for controlling the relevant entrance gates to the milking boxes and/or feeding parlours to give a dairy animal access exclusively to one of the milking boxes (22) and/or feeding parlours.

2. An assembly as claimed in daim 1, **characterized in that** the feeding station (35) respectively the feeding parlour is suitable for automatically supplying at least two sorts of feed (14), the control signal controlling the feeding station (35) respectively the feeding parlour in such a way that the at least two sorts of feed are supplied at least substantially separately.

3. An assembly as claimed in claim 2, **characterized in that** the control signal controls the feeding station (35) respectively the feeding parlour in such a way that all sorts of feed are supplied at least substantially separately from each other.

4. An assembly as claimed in claim 2 or 3, **characterized in that** the control signal controls the feeding station (35) respectively the feeding parlour in such a way that the order in which sorts of feed are supplied is arbitrary.

5. An assembly as claimed in claim 1 or 2, **characterized in that** the feeding station (35) respectively the feeding parlour is suitable for automatically supplying at least two sorts of feed, **in that** the assembly is provided with parameter-measuring means for measuring a momentary value of a variable parameter and for issuing a parameter value signal to the third control device, the control signal controlling the feeding station (35) respectively the feeding parlour in such a way that sorts of feed are supplied in a particular amount and in a particular ratio collectively respectively as a mixture, the control device being provided with a processing device for processing the parameter value signal into the control signal.

6. An assembly as claimed in any one of the preceding claims, **characterized in that** the assembly comprises atmospheric-condition-measuring means (45) for measuring the atmospheric conditions and for issuing an atmosphere indication signal to the control device.

7. An assembly as claimed in any one of the preceding claims, **characterized in that** the assembly comprises a clock for measuring the period of the year and for issuing a year period signal to the control device.

8. An assembly as claimed in any one of the preceding claims, **characterized in that** the assembly comprises means for measuring the condition score of an animal and for issuing a condition score signal to the control device.

9. An assembly as claimed in any one of the preceding claims, **characterized in that** the assembly is provided with means for determining per animal the eating rate per sort of feed, and for issuing an eating rate signal to the control device.

10. An assembly as claimed in any one of the preceding claims, **characterized in that** the assembly comprises means for measuring per animal the milk yield, and for issuing a milk yield signal to the control device.

11. An assembly as claimed in any one of the preceding claims, **characterized in that** the assembly comprises means for measuring the amount of protein and/or fat and/or minerals and/or amino acids or the like, in the milk obtained from that animal, and for issuing an ingredient signal to the control device.

12. An assembly as claimed in any one of the preceding claims, **characterized in that** the assembly comprises means for measuring the amount of a sort of feed consumed by an animal, and for issuing a consumed feed signal to the control device.

13. An assembly as claimed in any one of the preceding claims, **characterized in that** the control device is provided with an inputting device for inputting data into a memory of the control device.

14. An assembly as claimed in claim 13, **characterized in that** the control device is suitable for generating itself data for the memory.

15. An assembly as claimed in claim 14, **characterized in that** the data are updated continuously.

16. An assembly as claimed in any one of the preceding claims, **characterized in that** the feeding station (35) respectively the feeding parlour is provided with a receptacle, and with conveying means comprising a first conveyor (11) for conveying an amount of feed from the hopper (9, 10) to the receptacle (12) and a second conveyor (3) for conveying the amount of feed from the receptacle (12) to a feed trough (6).

17. An assembly as claimed in claim 16, **characterized in that** the receptacle (12) is provided with a weighing device (20) for measuring the feed present in the receptacle (12).

18. **An assembly** as claimed in claim 16 or 17, **characterized in that the** receptacle (12) has a bottom which is designed to be opened.

19. An assembly as claimed in claim 18, **characterized in that** there is provided a fourth control device for controlling the opening of the bottom of the receptacle (12).

20. An assembly as claimed in any one of claims 16 through 19, **characterized in that** the second conveyor (3) is a tube-shaped chute respectively a channel-shaped chute.

21. An assembly as claimed in any one of the preceding claims 16 through 20, **characterized in that** the feed trough is a feed trough which is capable of being closed by a closing means, the fourth control device also being suitable for controlling the operation of the closing means.

22. An assembly as claimed in any one of the preceding claims 16 through 21, **characterized in that** the fourth control device is integrated in the control device.

23. An assembly as daimed in any one of the preceding daims, **characterized in that** said period is measured from a fixed point of time of the day.

24. An assembly as claimed in any one of claims 1 through 22, **characterized in that** the assembly comprises a clock for measuring the momentary point of time when a dairy animal visits the feeding station (35) or the feeding parlour, and **in that** said period immediately precedes the momentary point of time.

## Patentansprüche

1. Anordnung zum automatischen Zuführen einer Futtermenge zu einem milchgebenden Tier in einem vorgegebenen Zeitraum, wobei die Anordnung versehen ist mit mehreren Melkboxen (22), von denen jede einen Melkroboter (25) zum automatischen Melken eines milchgebenden Tieres aufweist, wobei jede Melkbox (22) eine Fütterungsstation (35) zum automatischen Zuführen von Futter (14) zu dem milchgebenden Tier mittels Steuerung durch eine Steuervorrichtung aufweist, mit mehreren außerhalb der Melkboxen (22) angeordneten Fütterungsständen zum automatischen Zuführen von Futter zu dem milchgebenden Tier mittels Steuerung durch die Steuervorrichtung, wobei die Steuervorrichtung die gesamte Zufuhr von Futter in dem vorgegebenen Zeitraum derart steuert, daß sie zumindest annähernd gleich der Futtermenge ist, mit einer Uhr zum Messen des Tageszeitpunktes und zum Ausgeben eines Zeitsignals an die Steuervorrichtung, mit einem Speicher zum Speichern von Daten bezüglich der optimalen Futteraufnahme eines Tieres in Abhängigkeit von dem Tageszeitpunkt und mit Eingangstüren zu den Melkboxen und/oder den Fütterungsständen, wobei die Eingangstüren von der Steuervorrichtung gesteuert werden,
**dadurch gekennzeichnet, daß** die Steuervorrichtung in Abhängigkeit von dem von der Uhr gemessenen Zeitpunkt ein Steuersignal zum Steuern der entsprechenden Eingangstüren zu den Melkboxen und/oder den Fütterungsständen erzeugt, um einem milchgebenden Tier nur zu einer der Melkboxen (22) und/oder Fütterungsständen Zutritt zu gewähren.

2. Anordnung nach Anspruch 1,
**dadurch gekennzeichnet, daß** die Fütterungsstation (35) bzw. der Fütterungsstand geeignet ist, mindestens zwei Sorten von Futter (14) automatisch zuzuführen, wobei das Steuersignal die Fütterungsstation (35) bzw. den Fütterungsstand in der Weise steuert, daß die mindestens zwei Futtersorten zumindest im wesentlichen getrennt zugeführt werden.

3. Anordnung nach Anspruch 2,
**dadurch gekennzeichnet, daß** das Steuersignal die Fütterungsstation (35) bzw. den Fütterungsstand in der Weise steuert, daß alle Futtersorten zumindest im wesentlichen getrennt voneinander zugeführt werden.

4. Anordnung nach Anspruch 2 oder 3,
**dadurch gekennzeichnet, daß** das Steuersignal die Fütterungsstation (35) bzw. den Fütterungsstand in der Weise steuert, daß die Reihenfolge, in der Futtersorten zugeführt werden, beliebig ist.

5. Anordnung nach Anspruch 1 oder 2,
**dadurch gekennzeichnet, daß** die Fütterungsstation (35) bzw. der Fütterungsstand geeignet ist, mindestens zwei Futtersorten automatisch zuzuführen, daß die Anordnung mit einer Parametermeßvorrichtung versehen ist, um einen momentanen Wert eines variablen Parameters zu messen und ein Parameterwertsignal an die dritte Steuervorrichtung zu geben, wobei das Steuersignal die Fütterungsstation (35) bzw. den Fütterungsstand in der Weise steuert, daß Futtersorten in einer bestimmten Menge und in einem bestimmten Verhältnis gemeinsam bzw. als Gemisch zugeführt werden, wobei die Steuervorrichtung mit einer Verarbeitungsvorrichtung versehen ist, um das Parameterwertsignal zum Steuersignal zu verarbeiten.

6. Anordnung nach einem der vorhergehenden Ansprüche,
**dadurch gekennzeichnet, daß** die Anordnung eine Atmosphärenbedingungs-Meßvorrichtung (45) zum Messen der atmosphärischen Bedingungen und zum Ausgeben eines Atmosphären-Anzeigesignals an die Steuervorrichtung umfaßt.

7. Anordnung nach einem der vorhergehenden Ansprüche,
**dadurch gekennzeichnet, daß** die Anordnung eine Uhr zum Messen der Jahreszeit und zum Ausgeben eines Jahreszeitensignals an die Steuervorrichtung umfaßt.

8. Anordnung nach einem der vorhergehenden Ansprüche,
**dadurch gekennzeichnet, daß** die Anordnung eine Vorrichtung zum Messen des Körperkonditionsindexes eines Tieres und zum Ausgeben eines Körperkonditionsindex-Signals an die Steuervorrichtung umfaßt.

9. Anordnung nach einem der vorhergehenden Ansprüche,
**dadurch gekennzeichnet, daß** die Anordnung mit einer Vorrichtung zum Ermitteln der Freßgeschwindigkeit pro Futtersorte für jedes Tier und zum Ausgeben eines Freßgeschwindigkeitssignals an die Steuervorrichtung versehen ist.

10. Anordnung nach einem der vorhergehenden Ansprüche,
**dadurch gekennzeichnet, daß** die Anordnung eine Vorrichtung zum Messen der Milchleistung jedes Tieres und zum Ausgeben eines Milchleistungssignals an die Steuervorrichtung umfaßt.

11. Anordnung nach einem der vorhergehenden Ansprüche,
**dadurch gekennzeichnet, daß** die Anordnung eine Vorrichtung zum Messen des Gehalts an Protein und/oder Fett und/oder Mineralien und/oder Aminosäuren oder dergleichen in der von diesem Tier gewonnenen Milch und zum Ausgeben eines Bestandteilsignals an die Steuervorrichtung umfaßt.

12. Anordnung nach einem der vorhergehenden Ansprüche,
**dadurch gekennzeichnet, daß** die Anordnung eine Vorrichtung zum Messen der von einem Tier verzehrten Menge einer Futtersorte und zum Ausgeben eines Signals bezüglich des verzehrten Futters an die Steuervorrichtung umfaßt.

13. Anordnung nach einem der vorhergehenden Ansprüche,
**dadurch gekennzeichnet, daß** die Steuervorrichtung mit einer Eingabevorrichtung zum Eingeben von Daten in einen Speicher der Steuervorrichtung versehen ist.

14. Anordnung nach Anspruch 13,
**dadurch gekennzeichnet, daß** die Steuervorrichtung geeignet ist, selbst Daten für den Speicher zu erzeugen.

15. Anordnung nach Anspruch 14,
**dadurch gekennzeichnet, daß** die Daten ständig aktualisiert werden.

16. Anordnung nach einem der vorhergehenden Ansprüche,
**dadurch gekennzeichnet, daß** die Fütterungsstation (35) bzw. der Fütterungsstand mit einem Behälter und mit einer Fördervorrichtung versehen ist, die einen ersten Förderer (11) zum Fördern einer Futtermenge von dem Vorratsbehälter (9, 10) zu dem Behälter (12) und einen zweiten Förderer (3) zum Fördern der Futtermenge von dem Behälter (12) zu einem Futtertrog (6) umfaßt.

17. Anordnung nach Anspruch 16,
**dadurch gekennzeichnet, daß** der Behälter (12) mit einer Wiegevorrichtung (20) zum Messen des in dem Behälter (12) befindlichen Futters versehen ist.

18. Anordnung nach Anspruch 16 oder 17,
**dadurch gekennzeichnet, daß** der Behälter (12) einen Boden aufweist, der geöffnet werden kann.

19. Anordnung nach Anspruch 18,
**dadurch gekennzeichnet, daß** eine vierte Steuervorrichtung zum Steuern der Öffnung des Bodens des Behälters (12) vorhanden ist.

20. Vorrichtung nach einem der Ansprüche 16 bis 19,
**dadurch gekennzeichnet, daß** der zweite Förderer (3) durch einen rohrförmigen Schacht bzw. einen kanalförmigen Schacht gebildet ist.

21. Anordnung nach einem der vorhergehenden Ansprüche 16 bis 20,
**dadurch gekennzeichnet, daß** der Futtertrog durch einen Futtertrog gebildet ist, der durch eine Schließvorrichtung verschließbar ist, wobei die vierte Steuervorrichtung auch geeignet ist, den Betrieb der Schließvorrichtung zu steuern.

22. Anordnung nach einem der vorhergehenden Ansprüche 16 bis 21,
**dadurch gekennzeichnet, daß** die vierte Steuervorrichtung in die Steuervorrichtung integriert ist.

23. Anordnung nach einem der vorhergehenden Ansprüche,
**dadurch gekennzeichnet, daß** der Zeitraum ab einem festen Zeitpunkt des Tages gemessen wird.

24. Anordnung nach einem der Ansprüche 1 bis 22,
**dadurch gekennzeichnet, daß** die Anordnung eine Uhr umfaßt, um den momentanen Zeitpunkt zu messen, zu dem ein milchgebendes Tier die Fütterungsstation (35) oder den Fütterungsstand aufsucht, und daß der Zeitraum unmittelbar vor dem momentanen Zeitpunkt liegt.

## Revendications

1. Installation pour distribuer automatiquement une quantité d'alimentation à un animal laitier dans une période de temps prédéterminée, ladite installation étant munie de plusieurs boxes de traite (22), chacun muni d'un robot de traite (25) destiné à traire automatiquement un animal laitier, chaque box de traite (22) étant muni d'une station d'alimentation (35) destinée à distribuer automatiquement de l'alimentation (14) à l'animal laitier sous le contrôle d'un dispositif de commande, avec plusieurs salles d'alimentation situées à l'extérieur des boxes de traite (22) destinées à distribuer automatiquement de l'alimentation à l'animal laitier sous le contrôle d'un dispositif de commande, ledit dispositif de commande commandant la distribution collective de l'alimentation dans ladite période de temps prédéterminée de telle sorte qu'elle soit au moins approximativement égale à ladite quantité d'alimentation, avec une horloge destinée à mesurer le moment de la journée et à émettre un signal de temps vers le dispositif de commande, avec une mémoire destinée à incorporer des données concernant l'apport d'alimentation optimal d'un animal en fonction du moment de la journée, et avec des portes d'entrée vers les boxes de traite et/ou les salles d'alimentation, lesdites portes d'entrée étant commandées par le dispositif de commande, **caractérisée en ce que** le dispositif de commande, en fonction du moment de la journée mesuré par l'horloge, génère un signal de commande afin de commander les portes d'entrée appropriées des boxes de traite et/ou des salles d'alimentation pour donner accès à un animal laitier exclusivement à l'un des boxes de traites (22) et/ou à l'une des salles d'alimentation.

2. Installation selon la revendication 1, **caractérisée en ce que** la station d'alimentation (35) respectivement la salle d'alimentation est adaptée à une distribution automatique d'au moins deux sortes d'aliments (14), le signal de commande commandant la station d'alimentation (35) respectivement la salle d'alimentation de telle sorte qu'au moins deux sortes d'aliments sont distribuées au moins sensiblement de façon séparée.

3. Installation selon la revendication 2, **caractérisée en ce que** le signal de commande commande la station d'alimentation (35) respectivement la salle d'alimentation de telle sorte que toutes sortes d'aliments sont distribuées au moins sensiblement de façon séparée les unes des autres.

4. Installation selon la revendication 2 ou 3, **caractérisée en ce que** le signal de commande commande la station d'alimentation (35) respectivement la salle d'alimentation de telle sorte que l'ordre dans lequel les aliments sont distribués est arbitraire.

5. Installation selon la revendication 1 ou 2, **caractérisée en ce que** la station d'alimentation (35) respectivement la salle d'alimentation est adaptée à une distribution automatique d'au moins deux sortes d'aliments, **en ce que** l'installation est munie de moyens de mesure de paramètres destinés à mesurer une valeur momentanée d'un paramètre variable et destinés à émettre un signal de valeur de paramètre vers le troisième dispositif de commande, le signal de commande commandant la station d'alimentation (35) respectivement la salle d'alimentation de telle sorte que des sortes d'aliments sont distribuées collectivement en une quantité particulière et en un rapport particulier respectivement en tant que mélange, le dispositif de commande étant muni d'un dispositif de traitement destiné à traiter le signal de valeur de paramètre dans le signal de commande.

6. Installation selon l'une quelconque des revendications précédentes, **caractérisée en ce que** l'installation comprend des moyens de mesure de conditions atmosphériques (45) destinés à mesurer les conditions atmosphériques et à émettre un signal d'indication atmosphérique vers le dispositif de commande .

7. Installation selon l'une quelconque des revendications précédentes, **caractérisée en ce que** l'installation comprend une horloge destinée à mesurer la période de l'année et à émettre un signal de période de l'année vers le dispositif de commande.

8. Installation selon l'une quelconque des revendications précédentes, **caractérisée en ce que** l'installation comprend des moyens destinés à mesurer la note d'état d'un animal et à émettre un signal de note d'état vers le dispositif de commande.

9. Installation selon l'une quelconque des revendications précédentes, **caractérisée en ce que** l'installation est munie de moyens destinés à déterminer le taux de consommation par sorte d'aliment par animal, et destinés à émettre un signal de taux de consommation vers le dispositif de commande.

10. Installation selon l'une quelconque des revendications précédentes, **caractérisée en ce que** l'installation comprend des moyens destinés à mesurer la production de lait par animal, et destinés à émettre un signal de production de lait vers le dispositif de commande.

11. Installation selon l'une quelconque des revendications précédentes, **caractérisée en ce que** l'installation comprend des moyens destinés à mesurer la quantité de protéines et/ou de graisse et/ou de minéraux et/ou d'acides aminés ou analogues, dans le lait obtenu de cet animal, et destinés à émettre un signal d'ingrédient vers le dispositif de commande.

12. Installation selon l'une quelconque des revendications précédentes, **caractérisée en ce que** l'installation comprend des moyens destinés à mesurer la quantité d'une sorte d'aliments consommée par un animal, et destinés à émettre un signal d'aliment consommé vers le dispositif de commande.

13. Installation selon l'une quelconque des revendications précédentes, **caractérisée en ce que** le dispositif de commande est muni d'un dispositif d'entrée destiné à entrer des données dans une mémoire du dispositif de commande.

14. Installation selon la revendication 13, **caractérisée en ce que** le dispositif de commande est adapté à générer lui-même des données pour la mémoire.

15. Installation selon la revendication 14, **caractérisée en ce que** les données sont mises à jour en continu.

16. Installation selon l'une quelconque des revendications précédentes, **caractérisée en ce que** la station d'alimentation (35) respectivement la salle d'alimentation est munie d'un réceptacle et de moyens de transport comprenant un premier convoyeur (11) destiné à transporter une quantité d'alimentation de la trémie (9, 10) jusqu'au réceptacle (12) et un second convoyeur (3) destiné à transporter la quantité d'alimentation du réceptacle (12) jusqu'à un bac à aliments (6).

17. Installation selon la revendication 16, **caractérisée en ce que** le réceptacle (12) est muni d'un dispositif de pesée (20) destiné à mesurer l'alimentation présente dans le réceptacle (12).

18. Installation selon les revendications 16 ou 17, **caractérisée en ce que** le réceptacle (12) a un fond qui est conçu pour être ouvert.

19. Installation selon la revendication 18, **caractérisée en ce qu'**est prévu un quatrième dispositif de commande destiné à commander l'ouverture du fond du réceptacle (12).

20. Installation selon l'une quelconque des revendications 16 à 19, **caractérisée en ce que** le second convoyeur (3) est un glissoir en forme de tube respectivement un glissoir en forme de conduit.

21. Installation selon l'une quelconque des revendications précédentes 16 à 20, **caractérisée en ce que** le bac à aliments est un bac à aliments qui est capable d'être fermé par des moyens de fermeture, le quatrième dispositif de commande étant également adapté pour commander le fonctionnement des moyens de fermeture.

22. Installation selon l'une quelconque des revendications précédentes 16 à 21, **caractérisée en ce que** le quatrième dispositif de commande est intégré au dispositif de commande.

23. Installation selon l'une quelconque des revendications précédentes, **caractérisée en ce que** ladite période est mesurée à partir d'un moment fixe de la journée.

24. Installation selon l'une quelconque des revendications 1 à 22, **caractérisée en ce que** l'installation comprend une horloge destinée à mesurer le moment temporaire où un animal laitier se rend à la station d'alimentation (35) ou à la salle d'alimentation, et **en ce que** ladite période précède immédiatement le moment temporaire.
